# EUROPEAN PATENT APPLICATION

(11) **EP 1 580 643 A2**
(43) Date of publication of application: **28.09.2005**
(21) Application number: 05101427.2
(22) Date of filing: 24.02.2005
(51) Int. Cl.: G06F 1/00

(54) **Access protection for computer systems**

(30) Priority: 23.03.2004 EP 04101196
(71) Applicant: International Business Machines Corporation, Armonk, N.Y. 10504 (US)
(72) Inventor: Gierens, Konrad, 71126, Gaeufelden-Oeschelbronn (DE); Hindermeyer, Erich, 72135, Dettenhausen (DE)
(74) Representative: Duscher, Reinhard

(57) **Abstract**

The invention relates to access protection and theft protection of a computer system. The inventive access protection mechanism makes explicit use of a specific time interval for which the computer system operates in an ordinary mode. After this time interval has elapsed the computer system switches into a locked mode preventing the computer system from booting. In locked mode the functionality of the system is limited to a password dialogue and a corresponding password can only be obtained from a central database system after the user's identity has been checked. By regularly installing subsequent software application updates of a specific software application the computer system is prevented from switching into locked mode. By installing the software application update, the time interval is always manipulated in such a way, that is only elapses after a point of time where a subsequent software update becomes available.

## Description

### Field of the invention

The present invention relates to the field of access protection and theft protection for computer systems.

### Background and prior art

When a multiplicity of different users share a computer system environment, the access to the computer system environment or to parts of the computer system environment has to be controlled. By means of an access controlling mechanism only authorized users can make use of the computer system environment and its associated software applications. Access controlling mechanisms therefore aim to prevent usage of the computer system by non-authorized persons. In this way they represent an effective means to protect a computer system or parts of a computer system from misuse.

The most common access controlling mechanisms are based on a password driven access to the computer system. There exist different levels of password access or password protection of computer systems. Typically, a password access is either user related or device oriented. The user related access makes use of an user identifier that is unequivocally associated to each authorized user of the computer system. Before making use of the computer system, each user has to pass an authentication or login procedure thereby confirming his identity. Typically, the user has to enter a valid combination of user identifier and password. Only when the user has successfully passed the login procedure, access to the computer system is granted. Typically, such user related authentication procedures are purely software implemented and are commonly used by the most common multi-user operating systems such as e.g. UNIX, LINUX, or Windows^{TM}.

Device oriented authentication procedures protect hardware or hardware components of the computer system from unauthorized modification. For example, BIOS-password protection or hard disc drive (HDD) password protection are common techniques to prevent unauthorized persons from modifying the hardware configuration of a computer system.

Even though, there exists advanced encryption mechanisms for storing user identifications and associated passwords on the computer system, a misuse by unauthorized users can never completely excluded. Any unauthorized person that takes possession of a valid combination of user identification and corresponding password gets access to the computer system.

Regarding mobile computer systems an access protection is of extreme importance when the computer system becomes subject to theft. A stolen computer system becomes worthless for a thief, when the thief has no access to user identification and password or has no means to circumvent the inherent access controlling mechanism. Within the framework of personal computer systems an unauthorized user can in principal seize control of the computer system, i.e. circumventing the protection mechanism by simply installing another operating system or different software applications on a stolen computer system.

The above described access protection approaches as they are known from the prior art are not appropriate in an industrial environment where many users share one mobile computer system. For example in the field of computer supported portable diagnosis systems for automotive engines or similar it is rather inconvenient to make use of a password driven access to the computer system. In such an industrial environment a portable computer system is permanently shared by a multiplicity of different users. Here, an authentication procedure for each user would be rather impractical. Performing of an authentication procedure each time when the user changes would be merely obstructive.

The present invention therefore aims to provide an improved method and a computer program product for access protection and theft protection for a computer system.

### Summary of the invention

The invention provides a method of access protection of a computer system having a locked and an unlocked mode. Being in locked mode, the functionality of the computer system is limited to a password dialogue interrupting a boot process of the computer system. An interrupted boot process of the computer system only proceeds in response of a user entering the correct password in the password dialogue. Entering of an incorrect password in the password dialogue for a predefined number of times deactivates the computer system.

The computer system switches from unlocked mode into the locked mode when a predefined time interval has elapsed. When the computer system is deactivated it becomes completely useless for an unauthorized person or a thief. When deactivated, a time delay is enforced after which the password dialogue of the locked mode appears again.

Generally, the password for reactivating the computer system or for switching the computer system from the locked mode into the unlocked mode is not known to any user. Such a password is only needed in exceptional situations, such as e.g. a theft or unauthorized handling of a computer system. While in ordinary use the access protection mechanism keeps the computer system in the unlocked mode, i.e. no password is required for the usage of the computer system.

According to a further preferred embodiment of the invention, in locked mode, the boot process of the computer system is interrupted by the password dialogue prior to a booting of an operating system of the computer system. Hence, the password dialogue of the locked mode is independent of the operating system in use. Preferably, the password dialogue is implemented into a booting process of the computer system's BIOS. In this way, it is effectively prevented that an unauthorized person, e.g. a thief, is able to circumvent the password dialogue by installing a different operating system or any kind of software product trying to disable the access controlling mechanism.

According to a further preferred embodiment of the invention, the time interval controlling the switching into the locked mode is defined by an update process of a software application or by an authenticated user. By performing the update process of the software application, the time interval is redefined in order to extend the time frame for which the computer system is running in the unlocked mode. Alternatively, the time interval can be arbitrarily defined by an authenticated user. This particular user then has to pass a conventional authentication procedure.

According to a further preferred embodiment of the invention, the time interval defined by the update process of the software application elapses after the date from where a subsequent update of the software application becomes available. Assuming that whenever a software application update becomes available, the update is also installed on the computer system, the time interval is redefined in such a way that the subsequent software application update is available before the redefined time interval elapses. Subsequently installing all available and provided software application updates prevents the computer system from switching into locked mode. When in ordinary use, i.e. regularly installing software application updates, the user does not even realize that there exists an access protection of the computer system. Only in the exceptional situation, when for example the computer system is subject to theft or when an available software application update is not installed on the computer system, the time interval elapses and the computer system switches into the locked mode.

According to a further preferred embodiment of the invention, the time interval is given by a concrete date or by a maximum allowable operation time of the software application. Hence, the time interval either serves as an expiry date of the software application and the entire computer system or as a time meter defining the time interval for which the software application and/or the computer system operate in unlocked mode.

According to a further preferred embodiment of the invention, the password of the password dialogue is generated on the basis of a hardware identifier of the computer system. The hardware identifier, e.g. a serial number of the computer system, is stored in a non-volatile memory of the computer system and is displayed in the password dialogue. By means of such a hardware identifier, each computer system can unequivocally be identified. By storing the hardware identifier in a non-volatile memory that by any means cannot be manipulated by an operating system of the computer system, it becomes almost impossible to erase or manipulate the hardware identifier. Making use of this unequivocal hardware identifier, it is easy to determine whether a portable computer system has been stolen or has been subject to unauthorized usage.

According to a further preferred embodiment of the invention, reactivating or unlocking the computer system comprises the steps of: transmitting the hardware identifier and required user information to a central database system, checking an authentication of the user by the central database system on the basis of the hardware identifier and the user information, receiving a correct password from the central database system when the authentication of the user has been asserted by the central database system and finally entering the received password in the password dialogue in order to reactivate or unlock the computer system.

When a computer system is purchased by a user from a supplier, the user has to register in the central database system by providing particular user specific information together with the hardware identifier of the purchased computer system. By means of this registering procedure, the user becomes legitimated to receive updates of the software application as well as to receive the correct password for his particular computer system. Delivery of the correct password or software application update to a user that does not legitimate correctly is denied by the central database system. As a consequence an unauthorized person contacting the central database system thereby transmitting the hardware identifier of the computer system on the one hand would not receive the correct password and on the other hand would provide the central database system with a hardware identifier of a stolen computer system.

In another aspect, the invention provides a computer system having a locked and an unlocked mode, wherein in locked mode the functionality of the computer system is limited to a password dialogue interrupting a boot process of the computer system. The boot process of the computer system only proceeds in response of a user entering the correct password. Entering an incorrect password in the password dialogue for a predefined number of times deactivates the computer system. The computer system switches from unlocked into locked mode when a predefined time interval has elapsed.

According to a further preferred embodiment of the invention, the computer system comprising means for generating the password of the password dialogue. The password is generated on the basis of a hardware identifier of the computer system allowing to unequivocally identify the computer system.

According to a further preferred embodiment of the invention, the computer system comprises a non-volatile memory for storing the hardware identifier of the computer system, the time interval and a mode identifier. Furthermore, parts of the non-volatile memory are adapted to be read-only, preventing for example erasure or manipulation of the hardware identifier. Also the other parameters stored by the nonvolatile memory are protected against modification. Only by means of a specific software application, the time interval can be redefined and thus manipulated. Similar means apply to the modification of the mode identifier. The specific software application or even the BIOS itself initiate a switching into locked mode. An unlocking procedure in contrast is uniquely controlled by the BIOS by means of the password dialog of the locked mode.

In still another aspect, the invention provides a computer program product for a computer system having a locked and an unlocked mode. In locked mode the functionality of the computer system is limited to a password dialogue. The computer program product comprising computer program means that are adapted to: switch the computer system from unlocked mode into locked mode when a predefined time interval has elapsed, deactivate the computer system in response to a user entering an incorrect password in the password dialogue for a predefined number of times, interrupt a boot process of the computer system by the password dialogue when the computer system is in locked mode and to proceed with the boot process in response of the user entering the correct password.

### Brief description of the drawings

In the following, preferred embodiments of the invention will be described in greater detail by making reference to the drawings in which:
- Figure 1: illustrates a flowchart of the computer system operating in unlocked mode,
- Figure 2: shows a flowchart of the computer system operating in locked mode,
- Figure 3: shows a block diagram of the computer system,
- Figure 4: illustrates the environment for access protection of the computer system.

### Detailed description

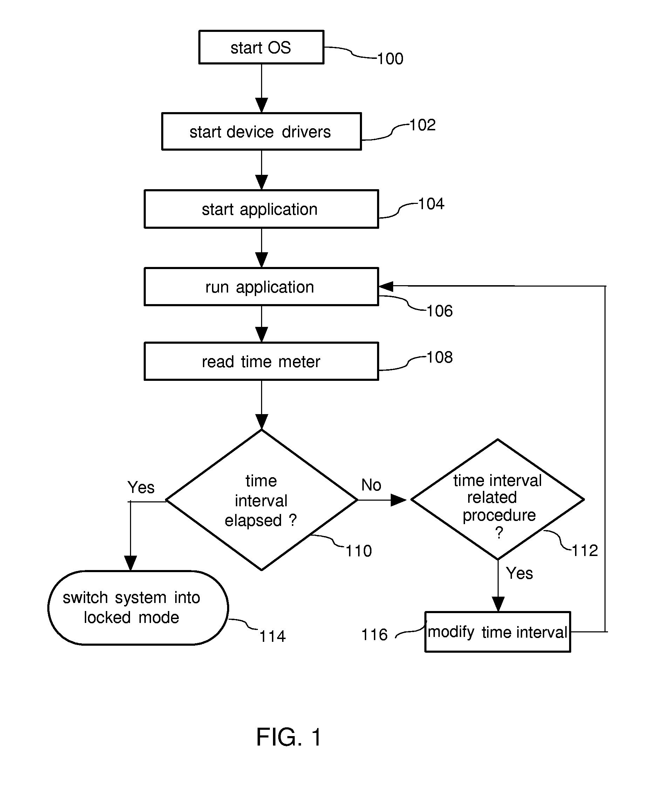

Figure 1 shows a flowchart of the computer system operating in the unlocked mode. After the computer system has been switched on, a BIOS boot is performed thereby checking whether the system runs in locked or unlocked mode. If the computer system operates in unlocked mode, in a first step 100 the operating system of the computer system is started, which means booting of the operating system is performed. Thereafter in step 102 a multiplicity of various device drivers are started before in the successive step 104 a specific software application is started.

This software application controls the time interval being essential for the inventive access protection mechanism of the computer system. After the software application has started in step 104 it gets into its ordinary operating mode in step 106, i.e. the application is running. While the application is running, in step 108 a time meter is read in order to determine the time interval. Step 108 either specifies a distinct due date at which the computer system switches from unlocked into locked mode or alternatively specifies a time frame indicating for how long the application and the entire computer system can be further used in unlocked mode.

The successive step 110 checks whether the due date or the time frame determined in step 108 has already elapsed. When in step 110 the procedure determines that the time interval has already elapsed, the procedure continues with step 114 and switches the computer system into the locked mode. Otherwise, when the time interval has not yet elapsed, the procedure continues with step 112 in which it is checked whether any procedure has been processed relating to the time interval. When in step 112 no processing of a time interval related procedure has been detected, the method returns to step 106 in which the software application continues in its ordinary operation mode.

In the opposite case, when in step 112 the processing of a time interval related procedure has been detected, a corresponding procedure takes place in the subsequent step 116. Examples for time interval related procedures are e.g. installing a software application update or a manual modification of the time interval by an authenticated user. When for example in step 112 a software application update has been detected, the time meter of the software application is modified in step 116 in such a way that the computer system operates in unlocked mode at least until a successive software application update becomes available. Performing a time interval related action in step 116 either relates to resetting of the time meter or redefining the time interval specifying the point of time after which the computer system switches to the locked mode. After execution of step 116 the method returns to the step 106 where the software application continues to operate in its ordinary mode.

Steps 108 through 116 are performed while the software application is running. Preferably, these steps are performed on a regular basis after a predefined time interval, such as every 5 or 10 minutes, has passed. Furthermore, the steps 108 through 116 representing a checking of the time interval are neither performed by the operating system or by the software application of the computer system. Preferably the checking of the time interval is performed by means of the BIOS of the computer system. In this way, the access protection mechanism becomes independent of the software configuration of the computer system.

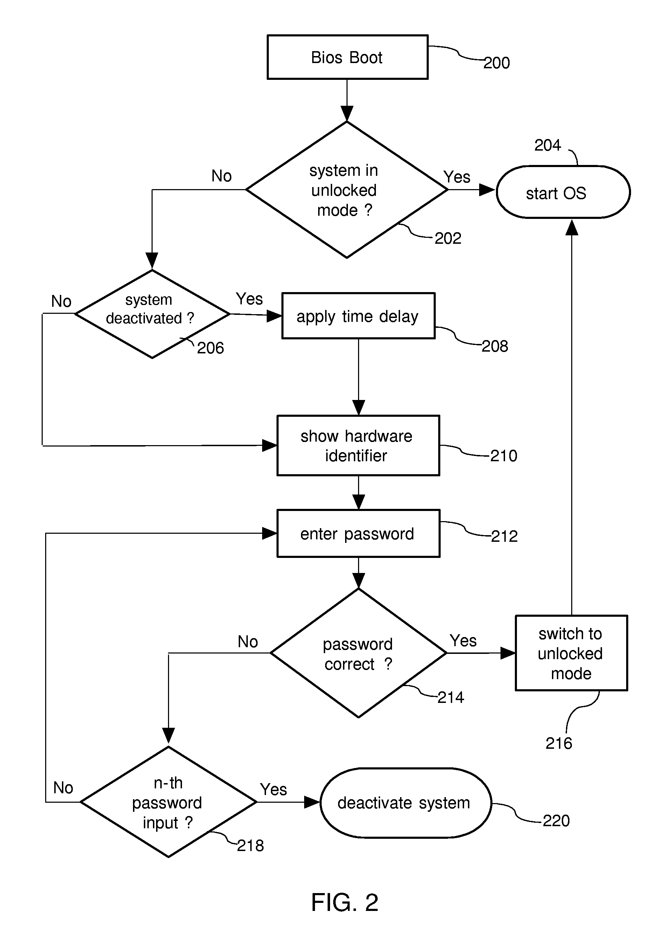

Figure 2 illustrates a flowchart of the computer system operating in the locked mode. After turning on the computer system, in a first step 200 a BIOS boot is performed. Directly thereafter, i.e. prior to a booting procedure of the operating system of the computer system, it is checked in step 202 whether the system is in unlocked mode. When the system is in unlocked mode in step 202 the procedure continues with step 204 in which the operating system is started. In this case the system operates in unlocked mode and the procedure illustrated in figure 1 takes place.

When in contrast in step 202 it is determined that the system has been switched into locked mode in a successive step 206 it is then checked if the system is even deactivated. When in step 206 a deactivation has been detected, the method continues with step 208 where a time delay is applied. During application of this time delay the computer system is by no means accessible, i.e. the screen does not display anything and the system does not react upon input made by some kind of input device. The time delay of step 208 can be arbitrarily defined. For example, when applied several times it may specify an increasing time frame for which the system has to remain deactivated. After the time frame specified by the time delay of step 208 has elapsed the procedure continues with step 210 where the hardware identifier of the computer system is illustrated on the screen of the computer system. Also when in step 206 the system has not turned out to be deactivated, the procedure continues with step 210 without applying any kind of time delay.

The visualization of the hardware identifier in step 210 is part of the password dialogue to which the functionality of the computer system is limited when operating in locked mode. The hardware identifier is needed to unequivocally identify the computer system. A legitimate user of the computer system may use the hardware identifier in order to receive the password for the password dialogue from a central database system. When the legitimate user has received the correct password from the central database system, the password is entered into the password dialogue in step 212. The successive step 214 checks whether the password is correct or not.

When in step 214 the password has turned out to be correct, then the procedure continues with step 216 where the computer system is switched from either deactivated or locked mode into the unlocked mode. After being switched into unlocked mode in step 216 the procedure continues with step 204 starting or booting the operating system of the computer system.

When in contrast in step 214 an incorrect password has been detected, the method continues with step 218. In step 218 the method simply checks whether an incorrect password has already been entered for a predefined number of times. When it turns out in step 218, that an incorrect password has been entered more than predefined times, then the method continues with step 220 in which the system is finally deactivated. Thereafter, steps 208 and 210 apply in order to provide a means of reactivating the system. A different scenario takes place when in step 218 it is detected that an incorrect password has not yet been entered for a predefined number of times. In this case the method returns to step 212 where the password can be re-entered without deactivating the system. The number specifying how often an incorrect password can be entered into the password dialogue before the system deactivation takes place can either be specified by an authenticated user or by various updates of the software application.

The computer system does not switch into the unlocked mode by simply re-booting. Whenever the computer system runs into the locked or deactivated mode it remains in this particular mode unless the correct password is entered in the password dialogue. Being once in locked or deactivated mode booting of the computer system is completely disabled. As a consequence an unauthorized user or thief has no possibility to manipulate the hardware or software configuration of the computer system. Hence not only the specific software application but the entire computer system becomes useless for such an unauthorized user.

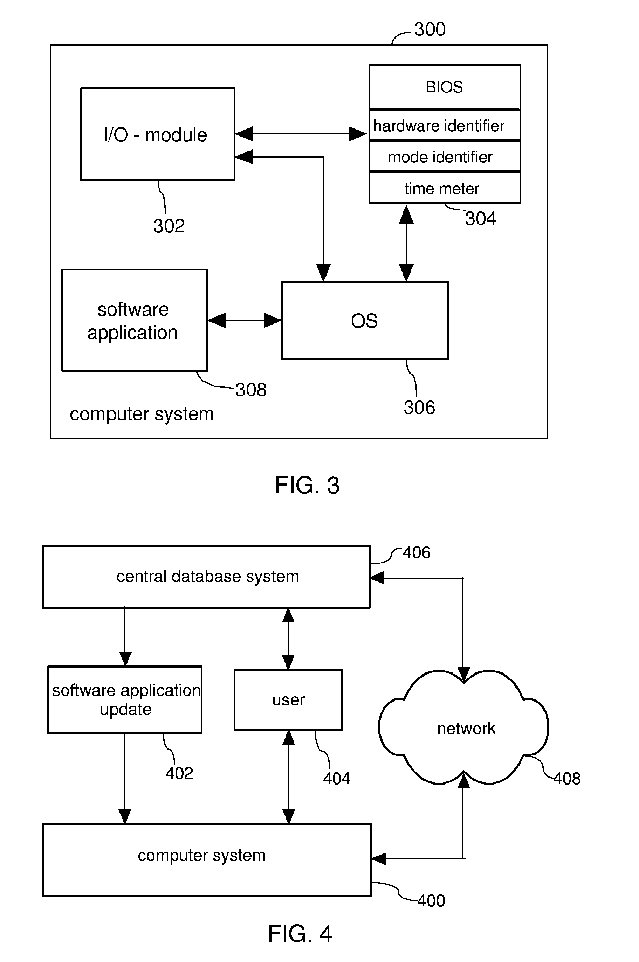

Figure 3 illustrates a block diagram of the inventive computer system. The computer system 300 has an input/output module 302, a non-volatile memory 304, an operating system 306 as well as a software application 308. It is important, that the BIOS of the computer system as well as the hardware identifier are stored in the non-volatile memory 304 of the computer system. Also the mode identifier specifying whether the system operates in locked or unlocked or even deactivated mode as well as the time meter specifying the time interval have to be stored in the non-volatile memory 304.

When in ordinary, i.e. unlocked, operation mode the computer system 300 operates as a conventional computer system. A software application 308 built for a specific operating system 306 is simply executed. During run time a user can interact with the software application by means of the input/output module 302. Interaction between the user ,hence the input/output module 302, and the software application 308 is provided by the operating system 306.

Hidden from the user the computer system makes inherently use of a specific time interval. This time interval either in form of a period of time or in form of a specific due date is stored by the time meter in the non-volatile memory 304. Checking whether the time interval has elapsed is performed by the BIOS when the computer system 300 is booted. If the time interval has elapsed, the computer system switches into the locked mode and the execution of the corresponding password dialogue is also handled by the BIOS. In locked mode the BIOS directly interacts with the input/output module 302 in order to provide the hardware identifier to a user and to receive the password entered by the user in response.

Since the hardware identifier, the mode identifier as well as the time meter specifying the time interval are necessary parameters for an initialization and execution of the password dialogue, they must be accessible prior to a booting process of the operating system 306. Furthermore, these parameters also have to be stored in a non-volatile way to ensure that the parameters are not erased when the computer system is detached from any kind of power supply. Moreover, the parameters are generally not modified by re-installing of the software application or re-installing of the operating system. The time interval or the time meter can only be modified by installing a subsequent software application update or by an authenticated user that has to pass a conventional authentication procedure. This functionality provides different possibilities to distribute the computer system and the software application.

When a user purchases the computer system from a supplier together with a service or maintenance agreement, the user will be supplied with software application updates within regular time intervals. By installing the software application updates appropriately, the computer system will never switch to the locked mode. For practical reason, the computer system may inform the user to install an available update before the computer system switches into locked mode. In another case, when a user purchases the computer system and the software application without a service or maintenance agreement, the user will be supplied with a password allowing to manually modify the time interval. In either case the theft protection or access protection of the computer system becomes active after the predefined time interval has elapsed.

Figure 4 shows a block diagram of the environment for the access protection of the computer system. Basic components of the environment are a computer system 400, a software application update 402, a user 404, a central database system 406 and a network 408. The user 404 making use of the computer system 400 regularly installs the software application updates 402 on the computer system 400. The software application updates 402 are either provided by the central database system 406 or by some kind of supplier.

When the computer system 400 has become subject to theft or when a required software application update has not been installed on the computer system 400, the computer system switches into the locked mode. In locked mode the computer system 400 only displays its hardware identifier to the user who provides this hardware identifier with further required information about his own identity to the central database system. Based on the provided hardware identifier the central database system 406 can determine if the computer system 400 has been formally announced as stolen.

Moreover, the central database system 406 is able to authenticate the user 404 as the legitimate user of the computer system 400. Only when the legitimate user has been identified by the central database system, the password required to unlock or to reactivate the computer system 400 is returned to the user 404. Preferably, the password is generated on the basis of the hardware identifier and some specific encryption algorithm being executed by the central database system and by the BIOS of the computer system 400.

Installing a new software application update may also incorporate an update of this encryption algorithm in the BIOS of the computer system 400. Such a procedure bears two fundamental advantages. First, each password is specific for only one computer system 400 and cannot be universally applied to different computer systems. Second, a password obtained from the central database system 406 unlocks or reactivates a computer system 400 only once. Hence it cannot be applied repeatedly when the computer system locks again after the predefined time interval elapsed for a second time.

Alternatively, the interaction between the computer system 400 and the central database system 406 can also be realized by making use of a network 408. In this case the computer system 400 automatically establishes a network connection to the central database system 406 and transmits its hardware identifier autonomously to the central database system 406. Additional information of the user 404 that are required by the central database system 406 in order to determine whether the user 404 is the legitimate user of the computer system 400 have to be transmitted to the central database system 406.

This transmittance can either be performed by the user directly transmitting the required information to the central database system 406 or by entering the required information into an expanded password dialogue of the computer system 400. The computer system 400 then transmits this additional information via the established network connection to the central database system 406.

### LIST OF REFERENCE NUMERALS

- 300: computer system
- 302: input/ output module
- 304: nonvolatile memory
- 306: operating system
- 308: software application
- 400: computer system
- 402: software application update
- 404: user
- 406: central database system
- 408: network

## Claims

1. A method of access protection of a computer system (300; 400) having a locked and an unlocked mode, in locked mode the functionality of the computer system being limited to a password dialog, the method of access protection comprising the steps of:
- switching the computer system from the unlocked mode into the locked mode when a predefined time interval has elapsed,
- deactivating the computer system in response to a user (404) entering an incorrect password in the password dialog for a predefined number of times,
wherein in locked mode, a boot process of the computer system is interrupted by the password dialog and wherein the boot process only proceeds in response of the user entering the correct password.

2. The method according to claim 1, wherein in locked mode, the boot process of the computer system is interrupted by the password dialog prior to a booting of an operating system (306) of the computer system (300; 400).

3. The method according to claim 1 or 2, wherein the time interval is defined by an update process of a software application (308) or by an authenticated user.

4. The method according to claim 3, wherein the time interval defined by the update process of the software application (308) elapses after the date from where a subsequent update (402) of the software application becomes available.

5. The method according to any one of the claims 1 to 4, wherein the time interval is given by a date or by a maximum allowable operation time of the software application (308).

6. The method according to any one of the claims 1 to 5, wherein the password of the password dialog is generated on the basis of a hardware identifier of the computer system (300; 400), the hardware identifier being stored in a non-volatile memory (304) of the computer system and being displayed in the password dialog.

7. The method according to any one of the claims 1 to 6, wherein reactivating the computer system (300; 400) or unlocking the computer system comprising the steps of:
- transmitting the hardware identifier and required user information to a central database system (406),
- checking an authentication of the user (404) by the central database system on the basis of the hardware identifier and user information,
- receiving a correct password from the central database system when the authentication of the user has been asserted by the central database system,
- entering the correct password in the password dialog in order to reactivate or unlock the computer system.

8. A computer system (300; 400) having a locked and an unlocked mode, wherein in locked mode the functionality of the computer system being limited to a password dialog, the computer system comprising:
- means for switching the computer system from the unlocked mode into the locked mode when a predefined time interval has elapsed,
- means for deactivating the computer system in response to a user entering an incorrect password in the password dialog for a predefined number of times,
wherein in locked mode, a boot process of the computer system is interrupted by the password dialog and wherein the boot process only proceeds in response of the user (404) entering the correct password.

9. The computer system (300; 400) according to claim 8, further comprising means to interrupt the boot process of the computer system by the password dialog when the computer system is in locked mode, the boot process being interrupted prior to a booting of an operating system (306) of the computer system.

10. The computer system (300; 400) according to claim 8 or 9, further comprising means to define the time interval by an update process of a software application (308) or by an authenticated user.

11. The computer system (300; 400) according to claim 10, wherein the time interval defined by the update process of the software application (308) elapses after the date from where a subsequent update (402) of the software application becomes available.

12. The computer system (300; 400) according to any one of the claims 8 to 11, further comprising means for generating the password of the password dialog, the password being generated on the basis of a hardware identifier of the computer system.

13. The computer system (300; 400) according to any one of the claims 8 to 12, further comprising a non-volatile memory (304) for storing the hardware identifier, the time interval, and a mode identifier.

14. The computer system (300; 400) according to any one of the claims 8 to 13, further comprising means for displaying the hardware identifier in the password dialog.

15. A computer program product for a computer system (300; 400) having a locked and an unlocked mode, wherein in locked mode the functionality of the computer system being limited to a password dialog, the computer program product comprising computer program means being adapted to:
- switch the computer system from the unlocked mode into the locked mode when a predefined time interval has elapsed,
- deactivate the computer system in response to a user (404) entering an incorrect password in the password dialog for a predefined number of times,
- interrupt a boot process of the computer system by the password dialog when the computer system is in locked mode,
- proceed the boot process in response of the user entering the correct password.

16. The computer program product according to claim 15, further comprising computer program means being adapted to interrupt the boot process of the computer system (300; 400) prior to a booting of an operation system of the computer system.

17. The computer program product according to claim 15 or 16, further comprising computer program means being adapted to define the time interval by an update process of a software application (308) or by an authenticated user.

18. The computer program product according to claim 17, wherein the time interval defined by the update process of the software application (308) elapses after the date from where a subsequent update (402) of the software application becomes available.

19. The computer program product according to any one of the claims 15 to 18, further comprising computer program means being adapted to generate the password of the password dialog on the basis of a hardware identifier of the computer system (300; 400).
